# EUROPEAN PATENT SPECIFICATION

(11) **EP 1 224 975 B1**
(45) Date of publication and mention of the grant of the patent: **20.04.2005**
(21) Application number: 02001094.8
(22) Date of filing: 22.01.2002
(51) Int. Cl.: B01J 41/06, B01J 41/12, C08F 8/32, C08G 81/02, C08J 5/20

(54) **Anion exchanger, process for producing the same, and its use**
Anionenaustauscher, Verfahren zu seiner Herstellung und seine Verwendung
Echangeur d'anions, procédé pour sa fabrication, et son utilisation

(30) Priority: 22.01.2001 JP 2001013143
(43) Date of publication of application: 24.07.2002
(73) Proprietor: Tosoh Corporation, Shinnanyo-shi Yamaguchi 746-0006 (JP)
(72) Inventor: Muranaka, Kazuaki, Shinnanyo-shi, Yamaguchi 746-0038 (JP); Tsuda, Teruhiko, Shinnanyo-shi, Yamaguchi 746-0051 (JP)
(74) Representative: Pautex Schneider, Nicole

(56) References cited:
- EP-A- 0 451 706
- US-A- 5 030 352

## Description

This invention relates to an anion exchanger, a packing for chromatography comprised of the anion exchanger, and a column for chromatography packed with the packing.

Fine particles having an anion exchanging group are widely used in the field of liquid chromatography for analyzing, or separating or isolating, for example, amino acids, peptide, protein, nucleic acids and saccharides.

An anion exchanger of a fine particle form is generally produced by introducing an anion exchanging group by allowing the anion exchanging group to bind directly to a functional group present on the surface of the fine particle. More specifically, methods are known wherein a functional group such as a hydroxyl, epoxy or haloalkyl group is introduced onto the surface of a fine particle, and then an anion exchanging nitrogen compound is allowed to react directly with the functional group on the particle surface whereby an anion exchanging group is introduced in the fine particle. The fine particles used include, for example, crosslinked fine particles of polysaccharides such as cellulose, agarose and dextran, fine particles of inorganic materials such as silica gel, alumina and zeolites, and fine particles of organic polymeric materials such as an acrylic polymer and a styrene polymer. Capacity for analysis or separation of the anion exchanger, namely, capacity for keeping a sample to be analyzed or separated on the surface of the anion exchanger comprised of a fine particle having an anion exchanging group having introduced on the surface thereof, is principally determined by area of the surface of fine particle (in the case of a fine particle having micropores, the capacity for analysis and separation is determined by the diameter of micropores and the surface area thereof). Such anion exchanger is characterized in that, when it is used for liquid chromatography for adsorbing a sample to be analyzed or isolated, as a single layer on the fine particle surface, it exhibits a high rate of adsorption and desorption and gives a sharp pattern of separation.

In recent years, in order to enhance the rate of operation for separation of protein or other sample materials to be adsorbed, an anion exchanger having an improved capacity for adsorption of protein or the other materials is being developed. Attempts are being made for enhancing the adsorption capacity of the surface of a fine particle. For example, a process for producing an anion exchanger capable of adsorbing a sample to form multi-layers of the sample on the surface of a fine particle by introducing a polymer chain having an anion exchanging group onto the fine particle surface has been proposed in U.S. Patent No. 5,453,186.

As the method of introducing the polymer chain having an anion exchanging group onto a fine particle surface, many proposals have been made. For examples, there have been proposed (i) a method of preparing a polymer having copolymerized therein a monomer having a crosslinking functional group, and then, allowing the crosslinking functional group introduced in the polymer to react with a functional group present on the surface of a fine particle to thereby introduce the polymer having an anion exchange group onto the fine particle surface; ( ii) a method of graft polymerization, namely, irradiating a fine particle surface with radiation to form radical initiating sites, or treating a fine particle surface with a cerium salt or a manganese salt to form hydroxyl groups as radical initiating sites, and then, allowing a polymer chain to grow on each radical initiating site; (iii) a method of introducing an unsaturated group onto a fine particle surface and then treating the unsaturated group-introduced polymer in a monomer solution whereby a polymer chain derived from the monomer is allowed to grow on the unsaturated group; and (iv) a method of introducing a functional group to a polymer terminal and then the polymer is allowed to react with a functional group present on a fine particle surface.

Among the above-mentioned methods (i) of preparing a polymer having copolymerized therein a monomer having a crosslinking functional group, and then, allowing the crosslinking functional group introduced in the polymer to react with a functional group present on the surface of a fine particle, a method of allowing polyamine to react with a functional group such as an epoxy group or a halogenated alkyl group present on a fine particle surface is widely used as a method of producing an anion exchanger because the anion exchanger can be easily produced by the fact that the nitrogen atoms in polyamine function as crosslinking sites and simultaneously as an anion exchanging group. But, a consideration has not been given for enhancement of the adsorption capacity for a sample to be analyzed, isolated or separated.

The above-mentioned graft polymerization method (ii) is known as being capable of producing an anion exchanger having a large capacity of adsorbing a sample. However, the anion exchanger produced by the graft polymerization method has straight-chain polymers on the surface thereof, and therefore, when it is used as being packed in a column for liquid chromatography, a high operation pressure is required for feeding a liquid. Thus, pressure-resistant equipment and pipes must be used for liquid chromatography means spanning from a liquid-feed pump to a detector and for paths of flow connecting these means each other. Consequently problems arise in that the equipment cost increases, a sealing material is readily deteriorated and parts must be exchanged with a shortened interval of time, and further, liquid leakage tends to occur. The liquid flow characteristics are closely related with the particle diameter of anion exchanger. If the particle diameter of anion exchanger is enlarged, the liquid flow characteristics can be improved, but, the separation capacity of anion exchanger as used for liquid chromatography is lowered. To sum up, the anion exchanger produced by the graft polymerization method (ii) cannot be advantageously employed for liquid chromatography for which a high adsorption capacity and a high separation capacity are required.

In view of the foregoing, an object of the present invention is to provide an anion exchanger which is a porous fine particle having a polyamine bound to the surface thereof, and exhibits an enhanced adsorption capacity for a sample to be analyzed, separated or isolated.

Another object of the present invention is to provide a process for producing an anion exchanger of a porous fine particle form, which exhibits an enhanced adsorption capacity for a sample to be analyzed, separated or isolated, by binding a polyamine to an epoxy group or a halogenated alkyl group or an aldehyde group, present on the surface of the porous fine particle.

Still another object of the present invention is to provide a packing for chromatography comprised of an anion exchanger exhibiting an enhanced adsorption capacity for a sample to be analyzed, separated or isolated.

A further aspect of the present invention is to provide a column for chromatography packed with the above-mentioned packing.

In one aspect of the present invention, there is provided an anion exchanger which is a porous fine particle having bound to the surface thereof a polyamine having a number average molecular weight of at least 50,000, and has particle diameter of 1 to 100 µm, and has pores having an average diameter of at least 150 Å. The polyamine is preferably polyethyleneimine and is especially preferably bound to the surface of the porous fine particle through at least one group selected from 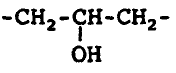 , -CH₂- and -CH=.

In another aspect of the present invention, there is provided a process for producing an anion exchanger of a porous fine particle form comprising the step of binding a polyamine having a number average molecular weight of at least 50,000 to at least one group selected from the group consisting of an epoxy group, a halogenated alkyl group and an aldehyde group, present on the surface of a porous fine particle having a particle diameter of 1 to 100 µm and having pores having an average diameter of at least 150 Å. Preferably, the binding of the polyamine to the porous fine particle is carried out by placing the polyamine in contact with the porous fine particle which is dispersed in an aqueous liquid medium, in the presence of a base.

In still another aspect of the present invention, there is provided a packing for chromatography, which is comprised of the above-mentioned polyamine-bound porous fine particle.

In a further another aspect of the present invention, there is provided a column for chromatography, which is packed with the above-mentioned packing.

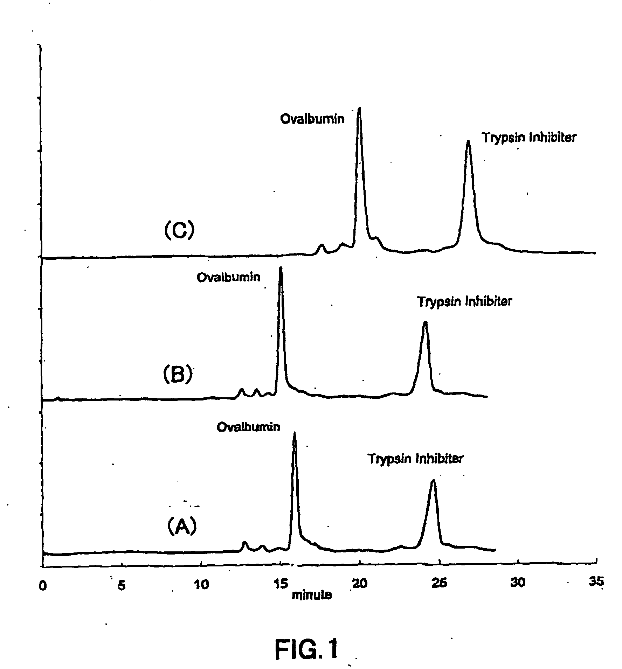

Figure 1 illustrates chromatograms (A), (B) and (C) as obtained for separating protein in Example 1, Comparative Example 1 and Comparative Example 3, respectively.

The anion exchanger of the present invention is comprised of a porous fine particle having bound to the surface thereof a polyamine having a number average molecular weight of at least 50,000. The anion exchanger has a large adsorption capacity for a sample to be analyzed or separated and, when it is used as a packing for liquid chromatography, it exhibits good characteristics for liquid passage. Therefore, the particle diameter can be rendered small, and the capacity of separation of a sample is not reduced. Consequently, according to the anion exchanger of the present invention, the capacity of adsorption of a sample is enhanced, and the rate of adsorption and desorption of a sample is enhanced and a sharp pattern of separation is obtained, which is in a striking contrast to the conventional technique.

The diameter of a porous fine particle constituting the anion exchanger of the present invention is in the range of 1 µm to 100 µm to obtain a better separation capability when used for liquid chromatography.

The porous fine particles used include organic porous fine particles and inorganic porous fine particles. The organic porous fine particles include, for example, those of copolymers of a monofunctional vinyl monomer with a polyfunctional vinyl monomer, and crosslinked polysaccharides. As specific examples of the monofunctional vinyl monomer, there can be mentioned hydroxyalkyl esters of acrylic acid and methacrylic acid, such as 2-hydroxyethyl acrylate, 2,3-dihydroxypropyl acrylate, 2-hydroxyethyl methacrylate and 2,3-dihydroxypropyl methacrylate; epoxy group-containing esters of acrylic acid and methacrylic acid, such as glycidyl acrylate and glycidyl methacrylate; halogenated alkyl esters of acrylic acid and methacrylic acid, such as 3-chloro-2-hydroxypropyl acrylate, 3-bromopropyl acrylate, 3-chloro-2-hydroxypropyl methacrylate and 3-bromopropyl methacrylate; acrylic acid and methacrylic acid; alkyl acrylates and alkyl methacrylates, such as methyl acrylate, ethyl acrylate, methyl methacrylate and ethyl methacrylate; styrene derivatives such as chloromethylstyrene, vinylbenzyl alcohol, vinylbenzyl glycidyl ether and hydroxystyrene; and vinyl acetate. As specific examples of the polyfunctional vinyl monomer, there can be mentioned polyol esters of acrylic acid and methacrylic acid, such as ethylene glycol diacrylate, glycerol diacrylate, ethylene glycol dimethacrylate and glycerol dimethacrylate; and divinylbenzene and triallyl isocyanurate. As specific examples of the crosslinked polysaccharides, there can be mentioned cellulose, agarose, dextran and mannose.

As specific examples of the inorganic porous fine particles, there can be mentioned silica, zeolite, titania, aluminum oxide and hydroxyapatite.

The porous fine particles are porous fine particles having pores with an average diameter of at least 150 Å, more preferably at least 250 Å, in view of improved adsorption capacity for a sample to be analyzed or separated. The upper limit of the average pore diameter is not particularly limited, but is usually 0.5 µm.

The polyamine having a number average molecular weight of at least 50,000 to be bound to the above-mentioned porous fine particle surface includes homopolymers of an amino group-containing unsaturated monomer and copolymers of two or more of such monomers. As specific examples of the polyamine, there can be mentioned polyethyleneimine, polyallylamine, and homopolymers and copolymers derived from amino group-containing unsaturated monomer such as N,N-dimethylaminopropyl-methacrylamide and N,N-dimethylaminoethyl methacrylate. Of these, polyethyleneimine is preferable in view of improved properties of the resulting anion exchanger.

The polyamine is not particularly limited provided that it has a number average molecular weight, as measured on viscosity, of at least 50,000, but preferably has a number average molecular weight in the range of about 50,000 to about 500,000. When polyamine having a molecular weight of this range is introduced onto the porous fine particle surface having pores exposed on the surface thereof, the polyamine easily penetrates into the pores and thus a large amount of the polyamine can be bound to the porous fine particle surface with the results that an anion exchanger having a more enhanced adsorption capacity can be obtained.

No particular limitation is imposed to the manner in which the polyamine is bound to the porous fine particle surface, provided that it is chemically bound. But, the polyamine is preferably polyethyleneimine and especially preferably polyethyleneimine bound to the porous fine particle surface through at least one group selected from the group consisting of -CH₂-C(OH)H-CH₂-, -CH₂- and -CH=. For example, the polyethylene imine is bound to the surface of the particle, in the form represented by the following formula (1) or (2): 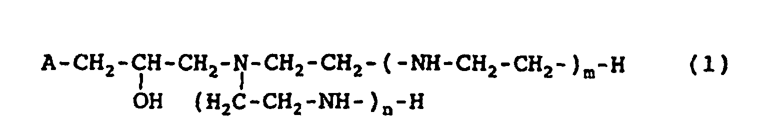 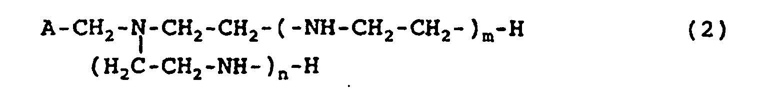 wherein A denotes the anion exchanger particle, m is an integer of at least 1 and n is an integer of at least 0. It is to be noted that the polyethyleneimine chain may have branches each extending from a nitrogen atom in the polymer chain. It is possible that some branches form crosslinks between adjacent polymer chains. When the polymer chain is bound through a group -CH= derived from an aldehyde group, a terminal nitrogen atom of the polymer chain is bound to the group -CH=.

The anion exchanger of the present invention is prepared preferably by a process wherein a polyamine having a molecular weight of at least 50,000 is allowed to react with a functional group capable of reacting with a tertiary or lower amino group, such as an epoxy group or a halogenated alkyl group or an aldehyde group, present on the surface of a porous fine particle.

As preferable examples of the functional groups capable of reacting with a tertiary or lower amino group, there can be mentioned an epoxy group, a halogenated alkyl group and an aldehyde group are preferable because the polyamine can be effectively introduced onto an epoxy group, a halogenated alkyl group or an aldehyde group by placing a porous fine particle having these groups in contact with the polyamine in an appropriate liquid medium. The halogenated alkyl group is preferably a chlorinated, brominated or iodated alkyl group having 1 to 6 carbon atoms.

The porous fine particle having a functional group capable of reacting with a tertiary or lower amino group, such as an epoxy group or a halogenated alkyl group or an aldehyde group, on the surface thereof is known and can be prepared by a conventional procedure. An epoxy group, a halogenated alkyl group and an aldehyde group can be introduced onto the surface of porous fine particle by treating a porous fine particle with, for example, epichlorohydrin, ethylene glycol diglycidyl ether and butanediol diglycidyl ether for an epoxy group; epichlorohydrin and 1,3-bromobutane for a halogenated alkyl group; and glutaraldehyde for an aldehyde group.

As the functional group, a single functional group or a combination of two or more functional groups may be present on the porous fine particle surface.

The reaction of the polyamine with an epoxy group or a halogenated alkyl group or an aldehyde group, present on the porous fine particle surface, is preferably carried out by placing the polyamine in contact with the porous fine particle in an aqueous dispersion under a basic condition. This procedure can be easily conducted and the production efficiency of the anion exchanger of the present invention is high.

The procedure of placing the polyamine in contact with the porous fine particle in an aqueous dispersion will be more specifically described. First, the porous fine particle is dispersed in an aqueous medium. The aqueous medium is not particularly limited provided that it is capable of dissolving the polyamine and the porous fine particle is dispersible in the aqueous medium. Then the polyamine is added in the aqueous medium while the aqueous medium is stirred under a basic condition. The basic condition can be obtained by adding a Dase such as an caustic alkali or a quaternary ammonium compounds such as tetramethylammonium hydroxide in an amount such that pH of at least 9 is obtained. The reaction of the polyamine with an epoxy group or a halogenated alkyl group or an aldehyde group proceeds even at room temperature, but is preferably carried out under heated conditions. For example, this reaction can be effected to the desired extent by maintaining at about 40°C for about 2 hours. Finally the porous fine particle is taken out from the aqueous medium and then washed to remove unreacted polyamine. An aqueous hydrochloric acid solution is preferably used for washing.

The anion exchanger of the present invention is useful as a packing for chromatography. More specifically the anion extender is packed in a column made of glass or a metal, and the packed column is used in chromatography for analyzing, separating or isolating anionic protein or other materials.

The invention will now be described by the following working examples that by no means limit the scope of the invention.

### Example 1

A 500 ml three-necked flask is charged with 50 g of porous hydrophilic acrylate polymer particles having an average particle diameter of 10 µm and pores with an average diameter of 1,000 Å, 50 g of pure water and 50 g of epichlorohydrin. A stirrer is equipped with the flask, and the flask was dipped in an oil bath maintained at 40°C and the content was gently stirred. The above-mentioned porous hydrophilic acrylate polymer particles used were taken from a commercially available column (tradename "TSK gel G5000 PWXL" available from Tosoh Corporation).

Separately, a 200 ml flask was charged with 40 g of sodium hydroxide and 60 g of pure water to prepare an aqueous sodium hydroxide solution. The aqueous sodium hydroxide solution was dropwise added to the above-mentioned content in the 500 ml flask over a period of one hour by using Perista pump while being stirred. After completion of the dropwise addition of sodium hydroxide, the mixture was further stirred for one hour to conduct epoxidation of the acrylate polymer particle surface. After completion of epoxidation, the fine particles were separated by a glass filter and washed with pure water.

A 300 ml three-necked flask was charged with 50 g of the epoxidated fine particles, and then 100 g of pure water was added, and the mixture was stirred at room temperature. To the flask, 15 g of a 30% solution of polyethyleneimine (tradename "P-70" available from Wako Pure Chemical Ind. Ltd.; number average molecular weight: 70,000) and the mixture was stirred. pH value of the polyethyleneimine-added mixture was higher than 11 as measured by a pH-test paper.

The flask was dipped in an oil bath maintained at 40°C and the content was stirred for 2 hours whereby polyethyleneimine was bound to the fine particle surface. After completion of the reaction, the fine particles were separated by a glass filter, and washed with an aqueous 0.5N hydrochloric solution and then with pure water to obtain an anion exchanger.

The anion exchanger was packed in a column having a size of 4.6 mm I.D . × 5 mm L . The adsorption capacity for protein was measured by a break-through method. The measuring conditions and equipment employed were as follows.
Pump: trade name "CCPM-II" available from Tosoh Corporation
Auto-sampler: trade name "AS-8020" available from Tosoh Corporation
Detector: trade name "UV-8020" available from Tosoh Corporation
Sample: 10 mg/ml, "BSA" available from Sigma Co.
Amount of sample injected: 5 ml
Measurement wavelength: UV 280 nm
Eluting solution: 20 mM tris-HCl buffer (pH: 8.0)

The adsorption capacity for protein (BSA) was 80 mgBSA/ml·gel as calculated taking the 10% height of extinction change due to protein elution as the break point.

The above-mentioned anion exchanger was packed in a column having a size of 7.5 mm I.D. × 75 mmL. Separation of protein was conducted under the following conditions. The equipment used was the same as mentioned above.
Eluting solution:
   A: 20 mM tris-HCl buffer (pH: 8.0)
   B: eluting solution A + 1.0M aqueous sodium chloride
Gradient: linear gradient transferring from 100% eluting solution A to 100% eluting solution B over a period of 30 minutes
Flow rate: 1.0 ml/min.
Sample: Ovalbumine (2 mg/ml)
   Trypsin inhibitor (2 mg/ml)
Amount of sample injected: 20 µl
Measurement wavelength: UV 280 nm

The test results are shown in chromatogram (A) in Fig. 1. As seen from chromatogram (A), the anion exchanger prepared in Example 1 had a large adsorption capacity for protein and a high separation performance. The liquid feed pressure in the flow paths was 1.2 MPa, and thus, the anion exchanger had good liquid permeation characteristics. That is, a large adsorption capacity and high separation performance can be obtained at a low liquid feed pressure.

### Example 2

An anion exchanger was prepared and its adsorption capacity for protein was evaluated by the same procedures as described in Example 1 wherein polyallylamine hydrochloride having a number average molecular weight of about 100,000 (available from Nittobo K.K.) was used instead of poyethyleneimine P-70, and, when the polyallylamine hydrochloride was bound to a fine particle, an aqueous 1N sodium hydroxide solution was used to adjust the pH value to 11. All other conditions remained the same. The adsorption capacity for protein of the anion exchanger was 40 mgBSA/ml·gel.

### Comparative Example 1

Three anion exchangers were prepared and their adsorption capacities for protein were evaluated by the same procedures as described in Example 1 wherein three kinds of polyethyleneimine having a number average molecular weight of 600, 1,800 and 10,000 (available from Wako Pure Chemical Ind. Ltd.) were separately used each in an amount of 5g with all other conditions remaining the same. The adsorption capacities for protein of the three anion exchangers'were as follows.

| Molecular weight of polyethyleneimine | Adsorption capacity for protein (mgBSA/ml·gel) |
|---|---|
| 600 | 42 |
| 1,800 | 40 |
| 10,000 | 43 |

As seen from the above results, when polyethyleneimine having a molecular weight of 10,000 or lower is used, the adsorption capacity for protein is small. When the molecular weight of polyethyleneimine is 10,000 or lower, there is no great difference among the adsorption capacity for protein irrespective of the magnitude of molecular weight.

The anion exchanger prepared from polyethyleneimine having a number average molecular weight of 600 was packed in a column and separation of protein was tested by the same procedures as described in Example 1.

The test results are shown in chromatogram (B) in Fig. 1. As seen from Fig. 1, the protein separation effect was poor as compared with that obtained in Example 1 (chromatogram (A)).

### Comparative Example 2

An anion exchanger was prepared and its adsorption capacity for protein was evaluated by the same procedures as described in Example 2 wherein polyallylamine having a number average molecular weight of 30,000 (available from Nittobo K.K.) was used instead of the polyallyamine hydrochloride with all other conditions remaining the same. The adsorption capacity for protein of the anion exchanger was 33 mgBSA/ml·gel.

### Comparative Example 3

An anion exchanger was prepared and its adsorption capacity for protein was evaluated by the same procedures as described in Example 1 wherein trimethylamine (available from Tokyo Kasei K.K.) was used instead of polyethyleneimine P-70 with all other conditions remaining the same. The adsorption capacity for protein of the anion exchanger was 35 mgBSA/ml·gel

The anion exchanger prepared was packed in a column and protein separation performance was tested by the same procedures as described in Example 1 wherein the gradient time was changed to 60 minutes with all other conditions remaining the same. The test results are shown in chromatogram (C) in Fig. 1. As seen from Fig. 1, the protein separation effect was poor as compared with that obtained in Example 1 (chromatogram (A)).

As seen from Fig. 1, the anion exchanger of the present invention having polyamine with a large molecular weight bound to the surface thereof has a large adsorption capacity, but, disadvantages such as widening of each elution peak of protein and elevation of feed pressure are not caused. This contrasts markedly with the conventional ion exchanger comprised of fine particles having an ion exchanging polymer chain introduced on the surface thereof, which has disadvantages such that the rate of adsorption and desorption of an objective sample in liquid chromatography is low, the elution peak of an objective sample is widened, and the pressure for feeding liquid is increased.

Advantages of the anion exchanger of the present invention are summarized as follows. By the introduction of polyamine with a number average molecular weight of at least 50,000, the anion exchanger exhibits an enhanced adsorption capacity for protein and other objective samples, although the anion exchanger is comprised of porous fine particles. When the anion exchanger is used as a packing for liquid chromatography, it exhibits good liquid permeability and high performance. By good liquid permeability, the operation can be conducted at a reduced liquid feed pressure.

That is, when protein or other materials are analyzed by using a column packed with the anion exchanger of the present invention, a large amount of a sample can be treated in a lot without elevation of working pressure, i.e., liquid feed pressure. Therefore, trace analysis of a large sample material as well as preparative chromatography can be advantageously carried out.

## Claims

1. An anion exchanger which is a porous fine particle **characterized in that** the particle has bound to the surface thereof a polyamine having a number average molecular weight of at least 50,000, and has a particle diameter of 1 to 100 µm, and has pores having an average diameter of at least 150 Å.

2. The anion exchanger according to claim 1, wherein the polyamine is polyethyleneimine.

3. The anion exchanger according to claim 2, wherein the polyethyleneimine is bound to the surface of the porous fine particle through at least one group selected from the group consisting of 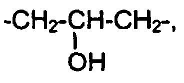 -CH₂-and -CH=.

4. A process for producing an anion exchanger of a porous fine particle form **characterized by** binding a polyamine having a number average molecular weight of at least 50,000 to at least one group selected from an epoxy group, a halogenated alkyl group and an aldehyde group, present on the surface of a porous fine particle having a particle diameter of 1 to 100 µm and having pores having an average diameter of at least 150 Å.

5. The process for producing an anion exchanger according to claim 4, wherein the binding of the polyamine to the porous fine particle is carried out by placing the polyamine in contact with the porous fine particle which is dispersed in an aqueous liquid medium, in the presence of a base.

6. A packing for chromatography, **characterized by** being comprised of the polyamine-bound porous fine particle as claimed in any one of claims 1 to 3.

7. A column for chromatography, **characterized** as being packed with the packing as claimed in claim 6.

## Patentansprüche

1. Anionenaustauscher, der ein feines poröses Teilchen ist, **dadurch gekennzeichnet, dass** ein Polyamin mit einem Zahlenmittel des Molekulargewichts von mindestens 50 000 an die Oberfläche des Teilchens gebunden ist und dass das Teilchen einen Teilchendurchmesser von 1 bis 100 µm und Poren mit einem durchschnittlichen Durchmesser von mindestens 150 Å besitzt.

2. Anionenaustauscher nach Anspruch 1, **dadurch gekennzeichnet, dass** das Polyamin Polyethylenimin ist.

3. Anionenaustauscher nach Anspruch 2, **dadurch gekennzeichnet, dass** das Polyethylenimin über zumindest eine Gruppe, die aus der Gruppe von 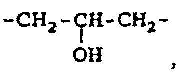 -CH₂und -CH= ausgewählt ist, an die Oberfläche des feinen porösen Teilchens gebunden ist.

4. Verfahren zur Herstellung eines Anionenaustauschers in Gestalt eines feinen porösen Teilchens, **gekennzeichnet durch** Bindung eines Polyamins mit einem Zahlenmittel des Molekulargewichts von mindestens 50 000 an zumindest eine von einer Epoxygruppe, einer halogenierten Alkylgruppe und einer Aldehydgruppe ausgewählte Gruppe, die auf der Oberfläche eines feinen porösen Teilchens vorhanden ist, das einen Teilchendurchmesser von 1 bis 100 µm und Poren mit einem durchschnittlichen Durchmesser von mindestens 150 Å besitzt.

5. Verfahren zur Herstellung eines Anionenaustauschers nach Anspruch 4, **dadurch gekennzeichnet, dass** die Bindung des Polyamins an das feine poröse Teilchen ausgeführt wird, indem das Polyamin in Gegenwart einer Base mit dem feinen porösen Teilchen in Berührung gebracht wird, das in einem wässrigen flüssigen Medium dispergiert ist.

6. Füllung für Chromatographie, **dadurch gekennzeichnet, dass** sie aus dem feinen porösen Teilchen mit gebundenem Polyamin besteht, wie in einem der Ansprüche 1 bis 3 beansprucht.

7. Säule für Chromatographie, **dadurch gekennzeichnet, dass** sie mit der Füllung gefüllt ist, wie in Anspruch 6 beansprucht.

## Revendications

1. Echangeur d'anions qui est une fine particule poreuse, **caractérisé en ce que** la particule comporte une polyamine liée à la surface de celle-ci, présentant une masse moléculaire moyenne en nombre d'au moins 50 000, et présente un diamètre de particule de 1 à 100 µm, et comporte des pores représentant un diamètre moyen d'au moins 150 Å.

2. Echangeur d'anions selon la revendication 1, dans lequel la polyamine est de la polyéthylèneimine.

3. Echangeur d'anions selon la revendication 2, dans lequel la polyéthylèneimide est liée à la surface de la fine particule poreuse grâce à au moins un groupement sélectionné parmi le groupe constitué de 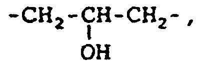 -CH₂- et -CH=.

4. Procédé de fabrication d'un échangeur d'anions sous forme d'une fine particule poreuse, **caractérisé par** la liaison d'une polyamine présentant une masse moléculaire moyenne en nombre d'au moins 50 000 à au moins un groupement sélectionné parmi un groupement époxy, un groupement alkyle halogéné et un groupement aldéhyde, présent à la surface d'une fine particule poreuse présentant un diamètre de particule de 1 à 100 µm et comportant des pores présentant un diamètre moyen d'au moins 150 Å.

5. Procédé de fabrication d'un échangeur d'anions selon la revendication 4, dans lequel la liaison de la polyamine à la fine particule poreuse est exécutée en mettant la polyamine en contact avec la fine particule poreuse, laquelle est dispersée dans un milieu liquide aqueux, en présence d'une base.

6. Elément de remplissage pour chromatographie, **caractérisé en ce qu'**il est constitué de la fine particule poreuse à polyamine liée selon l'une quelconque des revendications 1 à 3.

7. Colonne de chromatographie, **caractérisée en ce qu'**elle est remplie avec l'élément de remplissage selon la revendication 6.
